# EUROPEAN PATENT APPLICATION

(11) **EP 4 667 366 A1**
(43) Date of publication of application: **24.12.2025**
(21) Application number: 25182933.9
(22) Date of filing: 16.06.2025
(51) Int. Cl.: B64G 1/58, B64G 1/10, B64G 1/62

(54) **DE-ORBITING AND THERMAL PROTECTION ASSEMBLY TO BE APPLIED TO CUBESATS**

(30) Priority: 18.06.2024 IT 202400013936
(71) Applicant: Space Factory SRL, 80146 Napoli (IT)
(72) Inventor: PUNZO, Francesco, 80146 NAPOLI (IT); SALZA, Norberto, 80146 NAPOLI (IT); FUSCO, Daniele, 80146 NAPOLI (IT)
(74) Representative: Studio Torta S.p.A.

(57) **Abstract**

A de-orbiting and thermal protection assembly (1) to be applied to CubeSats comprising a fixing frame (2), suitable for being reversibly fixed to an external perimeter of a load-bearing structure (7) of a relative CubeSat (8), and a plurality of arms (3) fixed to the fixing frame (2) by means of a plurality of respective hinges (4) and suitable for supporting a heat shield.

The assembly comprises a position indicator (10) fixed to the CubeSat (8) and suitable for cooperating with a contrast portion (11) of the fixing frame (2) and reversible fixing means (10, 11) for fixing the fixing frame (2) to the CubeSat (8).

## Description

### CROSS-REFERENCE TO RELATED APPLICATIONS

This patent application claims priority from Italian patent application no. 102024000013936 filed on June 18, 2024, the entire disclosure of which is incorporated herein by reference.

### TECHNICAL FIELD

The present invention relates to a de-orbiting and thermal protection assembly applicable to CubeSats.

In particular, the present invention relates to a de-orbiting and thermal protection assembly applicable to CubeSats in such a manner as to provide them with a system which speeds up re-entry and, at the same time, guarantees safety in the same re-entry phase. Furthermore, the assembly of the invention is structured to be able to be applied, if necessary, to all those CubeSats which are dimensionally compatible.

### STATE OF THE ART

The CubeSat is a type of miniaturized satellite developed since 1999 by the California State Polytechnic University and Stanford University.

CubeSats are composed of many standard-sized units and their overall size can be increased by adding units of the same size even along a single axis.

The development of CubeSats has allowed a considerable reduction in costs in the world of satellites, thus revolutionizing access to space and opening new frontiers for universities, research institutions and emerging companies.

To date, CubeSats are used for a wide range of space missions, from ground observations to satellite communications and scientific research.

With the expansion of the CubeSat market, the need has increasingly been felt for solutions capable of guaranteeing greater flexibility and safety in space missions. In particular, the need for CubeSats to be provided with an effective and reliable system for their re-entry at the end of the mission or in an emergency is particularly felt.

In fact, during the re-entry phase the vehicles lose their kinetic energy, converting it into heat by means of friction with the atmospheric gases surrounding the vehicle itself. The heat is transferred to the atmospheric gases around the vehicle and the fluid tends to aerodynamic heating by convection, conduction and radiation through the viscous boundary layer surrounding the vehicle, giving rise to so-called "aerodynamic heating".

In this regard, it should be noted that the "heat shield" has long been considered an essential part for a spacecraft that must perform an atmospheric re-entry or moves at high speed in the atmosphere of a planet. Its purpose is precisely to protect the vehicle from the heat that develops when it moves at high speed in an atmosphere.

As may be obvious to a person skilled in the art, such a problem is particularly felt if the vehicle also hosts a payload for space experiments.

Another need related to the field of CubeSats is to be able to ensure and speed up their re-entry (de-orbiting) when the mission is over.

In fact, it is now known to those skilled in the art that the number of satellites rotating around the Earth in orbits between 500 and 1000 km (LEO - Low Earth Orbit) is constantly growing and, to avoid orbital saturation, the need to create solutions that favour the return of the satellites once the mission is over is starting to be strongly felt.

In particular, while in low orbits (<450 km) the atmospheric resistance naturally de-orbits the spacecraft, at higher altitudes (>450 km) the resistance is less significant and de-orbiting technologies must be developed. Current developments make use of deployable sails but are too complex and cumbersome for small satellites (up to 200 kg).

Obviously, providing a satellite with a de-orbiting device, as well as a heat shield, necessarily entails an additional significant expense in both economic and engineering terms. The above would be in contrast with the CubeSat philosophy which, as indicated above, owes its diffusion to its features of economy and compactness.

The need was therefore felt to provide a solution that would allow CubeSats to be equipped with a de-orbiting and thermal protection device without burdening the costs and size of the CubeSats.

The inventors of the present invention have created a single assembly capable of providing CubeSats with both a de-orbiting device and a thermal protection. The assembly of the present invention is physically independent of the CubeSat but is structured so that it can be applied to the CubeSat if necessary.

### DESCRIPTION OF THE INVENTION

The subject matter of the present invention is a de-orbiting and thermal protection assembly to be applied to CubeSats and characterized by comprising a fixing frame, suitable for being reversibly fixed to an external perimeter of a load-bearing structure of a relative CubeSat, and a plurality of arms fixed to said fixing frame by means of a plurality of respective hinges and suitable for supporting a heat shield; said assembly comprising a position indicator suitable for being fixed to said load-bearing structure of the CubeSat and suitable for cooperating with a cavity obtained in said fixing frame and reversible fixing means for fixing said fixing frame to the CubeSat; said position indicator being a spring pin.

Preferably, said position indicator is a spherical spring pin.

Preferably, said reversible fixing means are composed of a screw and nut assembly.

Preferably, said fixing frame has a square internal edge and a polygonal external edge with a number of sides greater than or equal to six.

Preferably, said hinges are fixed to said polygonal external edge and said reversible fixing means engage said square internal edge.

### BRIEF DESCRIPTION OF THE DRAWINGS

For a better understanding of the present invention, an embodiment is described below for illustrative and nonlimiting purposes together with the accompanying figures, in which:
- Figure 1 is a perspective view of a de-orbiting and thermal protection assembly according to the present invention applied to a relative CubeSat;
- Figure 2 illustrates a detail of Figure 1 with parts removed for clarity;
- Figure 3 illustrates a second detail of Figure 1 with parts removed for clarity; and
- Figure 4 illustrates a third detail of Figure 1 with parts removed for clarity.

### PREFERRED EMBODIMENT OF THE INVENTION

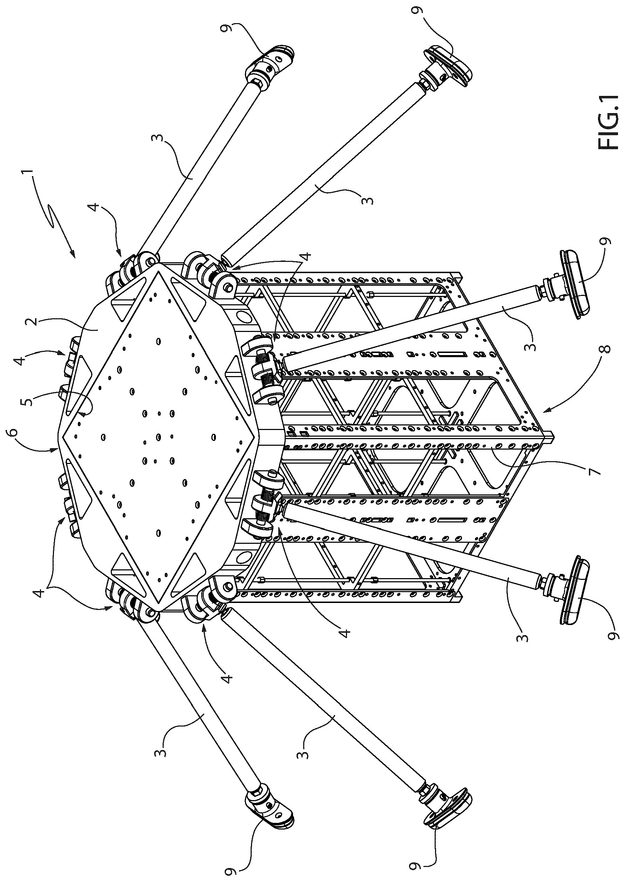

In Figure 1, reference numeral 1 indicates, as a whole, a de-orbiting and thermal protection assembly according to the present invention.

The de-orbiting and thermal protection assembly 1 comprises a fixing frame 2 and a plurality of arms 3 fixed to the fixing frame 2 by means of a respective plurality of hinges 4.

The fixing frame 2 has an internal edge 5 of square shape and an external edge 6 of octagonal shape.

The internal edge 5 is, in use, arranged abutting against a load-bearing structure 7 of a CubeSat 8 to which it is reversibly fixed as will be described below.

To the octagonal external edge 6 are fixed the hinges 4 which, in turn, are fixed to a first end 3a of the arms 3.

The presence of the hinges 4 ensures that during positioning in orbit, or launch into space, the arms are arranged parallel to each other in order to maintain the heat shield in its folded configuration and, only subsequently, the arms open radially, causing the opening of the heat shield. In particular, the heat shield, known and not represented in the figures for the sake of simplicity, has a substantially frustoconical surface conformation with a minor edge fixed at the fixing frame 2, and a major edge fixed to locking tips 9 arranged at a second end 3b of the arms 3.

The opening of the arms 3 will be controlled by one of the devices known and not described herein for the sake of simplicity and also because its nature does not constitute a relevant aspect of the present invention as a whole.

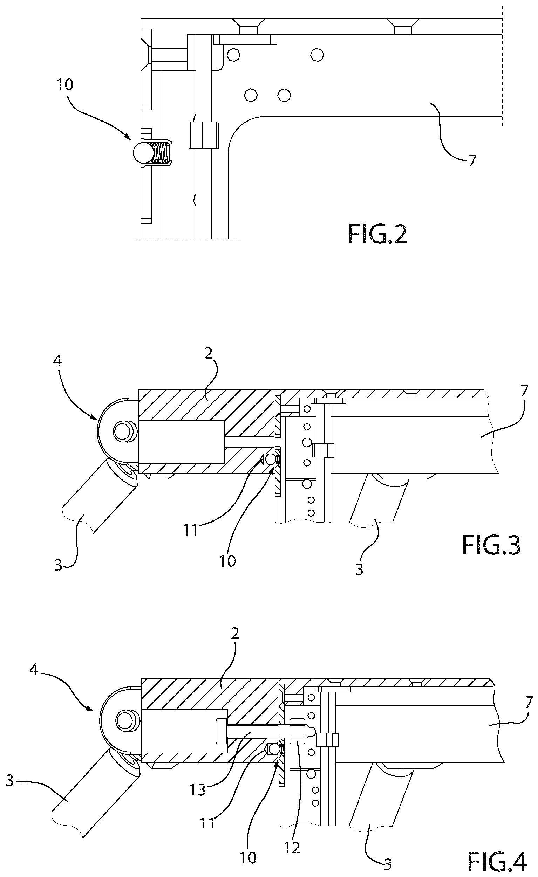

The de-orbiting and thermal protection assembly 1 comprises a spherical spring pin 10 (Figure 2) which has the function of a position indicator. As illustrated in Figure 3, the spherical spring pin 10 cooperates with a groove 11 obtained in the internal edge 5 and which has the function of a contrasting portion for indicating the correct relative positioning between the fixing frame 2 and the load-bearing structure 7 of the CubeSat 8. In use, the fixing frame 2 is arranged to surround an end portion of the load-bearing structure 7 of the CubeSat 8, on which it is slid until the spherical spring pin 10 is engaged with the groove 11. At this point it is certain that the correct positioning of the fixing frame relative to the load-bearing structure 7 has been reached.

As illustrated in Figure 4, the reversible fixing of the fixing frame 2 to the load-bearing structure 7 occurs by means of a nut 12/bolt 13 coupling.

In this regard, it should be noted that, known per se, a plurality of through holes are obtained in the load-bearing structures 7 that can be used to house both the spherical spring pin 10 and the bolt 13.

The assembly of the present invention provides a device that ensures thermal protection during the re-entry of the CubeSat in the same way as the heat shields of the prior art applied to larger satellites.

At the same time, the assembly of the present invention embodies a passive de-orbiting device for CubeSats, which exploits the interaction with the Earth's atmosphere, the magnetosphere or the ionosphere to accelerate the descent of the CubeSat in the atmosphere.

This will help to ensure, for example, that future telecommunication CubeSats comply with ESA Clean Space requirements, and therefore that LEO satellites will limit their presence in the protected region (up to 2000 km) to 5 years from the end of the mission or 5 years from the date of injection, if they do not have recurrent manoeuvring capacity.

In particular, with regard to de-orbiting, it has been evaluated that the application of the assembly according to the present invention on a CubeSat reduces its de-orbiting time (from 600 km to 400 km) from five years to just one year.

From the above it is clear that the assembly of the present invention represents a solution whose technical features guarantee both the de-orbiting and thermal protection of CubeSats without, for this reason, affecting either the economy or the compactness of the CubeSats.

In summary, the de-orbiting and thermal protection assembly of the present invention represents an important evolution in the field of CubeSats, offering a complete and highly reliable solution for space missions that require safe and controlled re-entry. Thanks to its innovative design and its compatibility with existing structures, this assembly is positioned as an ideal choice for future CubeSat missions, contributing to ensure the success and safety of space operations.

## Claims

1. De-orbiting and thermal protection assembly (1) to be applied to CubeSats and **characterized by** comprising a fixing frame (2), suitable for being reversibly fixed to an external perimeter of a load-bearing structure (7) of a relative CubeSat (8), and a plurality of arms (3) fixed to said fixing frame (2) by means of a plurality of respective hinges (4) and suitable for supporting a heat shield; said assembly comprising a position indicator (10) suitable for being fixed to said load-bearing structure (7) of the CubeSat (8) and suitable for cooperating with a cavity (11) obtained in said fixing frame (2) and reversible fixing means (12, 13) for fixing said fixing frame (2) to the CubeSat (8); said position indicator being a spring pin (10).

2. De-orbiting and thermal protection assembly according to claim 1, **characterized in that** said position indicator is a spherical spring pin (10).

3. De-orbiting and thermal protection assembly according to one of the previous claims, **characterized in that** said reversible fixing means are composed of a screw (13) and nut (12) assembly.

4. De-orbiting and thermal protection assembly according to one of the previous claims, **characterized in that** said fixing frame (2) has a square internal edge (5) and a polygonal external edge (6) with a number of sides greater than or equal to six.

5. De-orbiting and thermal protection assembly according to claim 4, **characterized in that** said hinges (4) are fixed to said external edge (6) and said reversible fixing means (12, 13) engage said internal edge (5).
